# EUROPEAN PATENT APPLICATION

(11) **EP 3 043 300 A1**
(43) Date of publication of application: **13.07.2016**
(21) Application number: 16150154.9
(22) Date of filing: 05.01.2016
(51) Int. Cl.: G06Q 10/08, G06Q 10/06

(54) **RESTOCKING WORKFLOW PRIORITIZATION**

(30) Priority: 09.01.2015 US 201562101673 P; 29.12.2015 US 201514982856
(71) Applicant: Honeywell International Inc., Morris Plains, NJ 07950 (US)
(72) Inventor: MELLOTT, Mark, Morris Plains, NJ 07950 (US); MURAWSKI, Mark David, Morris Plains, NJ 07950 (US); SANCHEZ, Vanessa Cassandra, Morris Plains, NJ 07950 (US); PECORARI, John, Morris Plains, NJ 07950 (US); VISZLAY, Heather, Morris Plains, NJ 07950 (US)
(74) Representative: Houghton, Mark Phillip

(57) **Abstract**

A system includes a plurality of data collection devices to receive and provide retail store product inventory data, rate of sale data, and incoming product inventory data in real time; and a programmed computer coupled to receive the data from the plurality of data collection devices and execute code to generate and prioritize restocking workflow activities as a function of the received data. The programmed computer further provides the restocking workflow activities to at least one of the data collection devices to direct a worker to restock a product.

## Description

### CROSS-REFERENCE TO RELATED APPLICATION

The present application claims the benefit of U.S. Patent Application No. 62/101,673 for *Restocking Workflow Prioritization* filed January 9, 2015, which is hereby incorporated by reference in its entirety.

### FIELD OF THE INVENTION

The invention is generally related to a system and method for prioritizing retail product restocking, and, more specifically, to a system and method for real time retail product restocking prioritization.

### BACKGROUND

When the inventory of a product in store goes to zero, the store misses or loses sales of that product, as the shopper has no product to purchase. When a truck arrives at the store with products for restocking, the items are often restocked in the order in which they arrive. As a result, significant time can pass before an empty shelf is restocked, leading to lost revenue. Additionally, fast moving products in the store will empty more quickly than slow moving products and can remain empty for a significant amount of time while waiting for earlier arrived products to be stocked, resulting in customer dissatisfaction, reduced turns, and reduced profit.

### SUMMARY

In an aspect of the invention, a system comprises: a plurality of data collection devices to receive and provide retail store product inventory data, rate of sale data, and incoming product inventory data in real time; a programmed computer coupled to receive the data from the plurality of data collection devices and execute code to generate and prioritize restocking workflow activities as a function of the received data; and wherein the programmed computer further provides the restocking workflow activities to at least one of the data collection devices to direct a worker to restock a product.

In an embodiment, at least one data collection device comprises a voice recognition headset and the workflow activities are provided to the worker via voice.

In an embodiment, restocking workflow activities are prioritized based on a projected time when the product will be out of stock on a shelf in the retail store.

In an embodiment, the system comprises obtaining a profit margin for each product and prioritizing based on profit margin.

In an embodiment, the restocking workflow activities are prioritized to minimize an amount of empty shelf space.

In an embodiment, the data used to generate and prioritize restocking workflow activities is weighted according to retail store management set priorities.

In an embodiment, the restocking workflow activities are interleaved with existing worker workflow activities based on a best fit context of the worker.

In another embodiment, providing restocking workflow activities comprises obtaining a list of activities being performed by a worker includes obtaining multiple lists of activities for multiple workers, and wherein the interleaving of the surprise activity is based on a best fit context of the multiple workers.

In an embodiment, the list of restocking activities forms a new list of workflow activities for a worker.

In another aspect of the invention, a method comprises receiving at a programmed computer, retail store product inventory data, rate of sale data, and incoming product inventory data in real time from a plurality of data collection devices; executing code on the computer to generate and prioritize restocking workflow activities as a function of the received data; and providing via the programmed computer, the restocking workflow activities to at least one of the data collection devices to direct a worker to restock a product.

In an embodiment, the at least one data collection device comprises a voice based headset and the workflow activities are provided to the worker via voice.

In an embodiment, restocking workflow activities are prioritized based on a projected time when the product will be out of stock on a shelf in the retail store.

In an embodiment, the method comprises obtaining a profit margin for each product and prioritizing based on profit margin.

In an embodiment, the restocking workflow activities are prioritized to minimize an amount of empty shelf space.

In another embodiment, the data used to generate and prioritize restocking workflow activities is weighted according to retail store management set priorities.

In another embodiment, the restocking workflow activities are interleaved with existing worker workflow activities based on a best fit context of the worker.

In yet another embodiment, providing restocking workflow activities comprises obtaining a list of activities being performed by a worker includes obtaining multiple lists of activities for multiple workers, and wherein the interleaving of the surprise activity is based on a best fit context of the multiple workers.

In an embodiment, the list of restocking activities forms a new list of workflow activities for a worker.

In another aspect of the invention, a machine readable storage device having instructions for execution by a processor of the machine to perform a method comprises: receiving at a programmed computer, retail store product inventory data, rate of sale data, and incoming product inventory data in real time from a plurality of data collection devices; executing code on the computer to generate and prioritize restocking workflow activities as a function of the received data; and providing via the programmed computer, the restocking workflow activities to at least one of the data collection devices to direct a worker to restock a product.

In an embodiment, at least one data collection device comprises a voice based headset and the workflow activities are provided to the worker via voice.

In an embodiment, restocking workflow activities are prioritized based on a projected time when the product will be out of stock on a shelf in the retail store.

In an embodiment the machine readable storage device comprises obtaining a profit margin for each product and prioritizing based on profit margin.

In an embodiment, the restocking workflow activities are prioritized to minimize an amount of empty shelf space.

In an embodiment, the data used to generate and prioritize restocking workflow activities is weighted according to retail store management set priorities.

In another embodiment, the restocking workflow activities are interleaved with existing worker workflow activities based on a best fit context of the worker.

In yet another embodiment, providing restocking workflow activities comprises obtaining a list of activities being performed by a worker includes obtaining multiple lists of activities for multiple workers, and wherein the interleaving of the surprise activity is based on a best fit context of the multiple workers.

In an embodiment, the list of restocking activities forms a new list of workflow activities for a worker.

### BRIEF DESCRIPTION OF THE DRAWINGS

The invention will now be described by way of example, with reference to the accompanying Figures, of which:
Figure 1 is a perspective view of a distributed headset;
Figure 2 is a schematic diagram of a distributed headset system;
Figure 3 is a block diagram of a method of prioritizing restocking;
Figure 4 is a schematic diagram of an electronics module of the distributed headset;
Figure 5 is a schematic diagram of a computing device;
Figure 6 is a block diagram of a method of prioritizing restocking by interleaving surprise activities; and
Figure 7 is a block diagram of a method of prioritizing restocking by managing deadlines.

### DETAILED DESCRIPTION

In the following description, reference is made to the accompanying drawings that form a part hereof, and in which is shown by way of illustration specific embodiments which can be practiced. These embodiments are described in sufficient detail to enable those skilled in the art to practice the invention, and it is to be understood that other embodiments can be utilized and that structural, logical and electrical changes can be made without departing from the scope of the present invention. The following description of example embodiments is, therefore, not to be taken in a limited sense, and the scope of the present invention is defined by the appended claims.

The functions or algorithms described herein can be implemented in software or a combination of software and human implemented procedures in one embodiment. The software can consist of computer executable instructions stored on computer readable media or computer readable storage device such as one or more memory or other type of hardware based storage devices, either local or networked. Further, such functions correspond to modules, which are software, hardware, firmware or any combination thereof. Multiple functions can be performed in one or more modules as desired, and the embodiments described are merely examples. The software can be executed on a digital signal processor, ASIC, microprocessor, or other type of processor operating on a computer system, such as a personal computer, server or other computer system.

A system provides for real time restocking prioritization. Workflows can be prioritized based on store inventory, arriving goods, and point of sale activity.

A voice solution can make use of the store product inventory, the incoming received products, and the point of sale rate of product sales to prioritize restocking work flows and direct the workers to restock high priority items before low priority items. By tracking such data in real time, restocking can be performed to minimize empty shelves and prevent potential lost revenue. In one embodiment, an algorithm receives real time information from workers and retail computer systems including rate of sale, inventory, and incoming products. The voice solution can be used to create workflows for workers that prioritize the items to be restocked. The workflows can be implemented via the voice solution or other mechanism to direct workers to perform restocking activities in accordance with the item priorities.

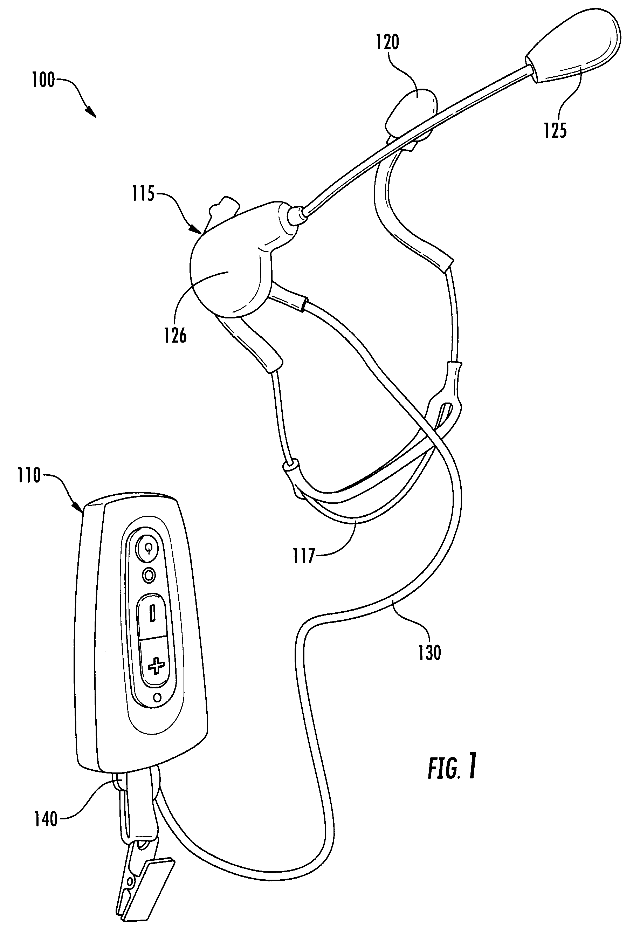

A distributed headset illustrated at 100 in block diagram form in Figure 1 includes a wireless enabled voice recognition device that utilizes a hands-free profile.

In an embodiment, the distributed headset is substantially similar to the distributed headset disclosed in U.S. Provisional Patent Application No. 62/097480 filed December 29, 2014, U.S. Provisional Patent Application No. 62/101568, filed January 9, 2015, and U.S. Patent Application No. 14/918969, and the disclosures therein are hereby incorporated by reference in their entireties.

To provide a long battery life consistent with long work shifts, elements can be off-loaded into an electronics module 110 that is remotely coupled to a light-weight and comfortable headset 115 secured to a worker head via a headband 117. The headband 117 can be a band that is designed to fit on a worker head, in an ear, over an ear, or otherwise designed to support the headset that includes one or more speakers 120 and multiple microphones 125, 126. Microphone 126 can be one or more microphones to provide for noise cancellation continuously listening to and blocking environmental sounds to enhance voice recognition and optionally provide for noise cancellation. In an embodiment (not shown), the electronics module 110 can be integrated into the headset 115 rather than being remotely coupled to the headset 115.

The electronics module 110 can be used to offload several components of the distributed headset 100 to reduce the weight of the headset 115. In some embodiments, one or more of a rechargeable or long life battery, keypad, Bluetooth® antenna, and printed circuit board assembly (PCBA) electronics. The electronics module 110 can be mounted to a worker torso (lapel clip and/or lanyard). The headset 115 attaches to the electronics module 110 via a communication link such as a small audio cable 130 or wireless link. Distributed headset 100 can provide a flexible use case across multiple workflows in multiple markets. Grocery retail, direct store delivery, healthcare, etc. In some embodiments, the distributed headset 100 has a low profile and is not intimidating to a customer in a retail setting. Headset 115 can be minimalistic in appearance in some embodiments.

Electronics module 110 can be used with different headsets, such as Vocollect ™ headsets, depending on environment. The electronics module 110 can read a unique identifier (I.D.) of the headset, which can be stored in a headset electronic circuitry package 135 that is supported by headband 130 and is also used to electronically couple the speakers and microphones to electronics module 110. In one embodiment, the audio cable 130 includes multiple conductors or communication lines for signals which can include a speaker +, speaker -, ground digital, microphone, secondary microphone, and microphone ground. The electronics module 110 can utilize a user configurable attachment 140, such as a plastic loop, and attachment position on the worker in some embodiments. Where a wireless link between the headset 115 and electronics module 110 is used, such as Bluetooth type of communication link, the headset 115 can include a small lightweight battery. The communication link can provide wireless signals suitable for exchanging voice communications.

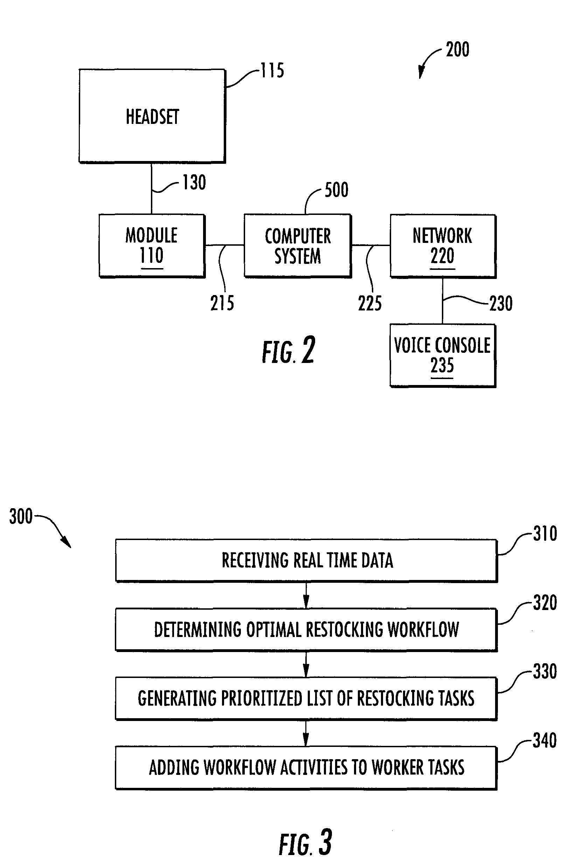

Figure 2 is a block diagram illustrating an architecture 200 of a distributed headset system for providing communications with a worker.

Architecture 200 includes a headset 115 and electronics module 110 as previously described. Electronics module 110 can be coupled to a server or other device, such as a terminal 500 via a wireless line 215, such as a Bluetooth® connection. The terminal 500 can be further coupled to a network 220 via a wireless or wired connection 225 such as WLAN, and then further coupled via a wired or wireless connection 230 to a voice console 235. Voice console 235 can assign an operator to the terminal 500. In some embodiments, element 235 is a retail store computer having applications and data for managing operations of the retail store, including inventory control and other functions.

In an embodiment, voice templates can stored locally in terminal 500 to recognize worker voice interactions and convert the interaction into text based data and commands for interaction with an application running on the terminal 500. Note that the functions ascribed to individual elements of the architecture 200 can be performed in one or more locations in further embodiments. For example, terminal 500 can perform voice recognition in one embodiment, or the electronics module 110 can perform voice recognition utilizing the voice templates. In one embodiment, the first stages of voice recognition can be performed on the electronics module 110, with further stages performed on the terminal 500. In further embodiments, raw audio can be transmitted from the electronics module 110 to terminal 500 where the final stages of voice recognition are completed.

Figure 3 is a flowchart illustrating a method 300 of prioritized restocking. At 310 data from various sources in a retail store is collected and provided to a computer system 500 that is executing method 300. The method 300 receives the data at 310. The data can include information obtained from workers in the store that utilize various scanning devices and report observations regarding the state of product inventor in the retail space, as well as from a loading dock. Thus, as a worker performs workflow activities as directed through their headsets or other wireless devices, they provide such information back to the computer system 500. Information can include product display inventory. Inventory information can also be collected from point of sale registers, which record products purchased by customers, but generally is unable to include product in customer possession in the store prior to purchase. Thus, the point of sale inventory generally may not completely reflect the actual inventory available on the shelves of the store.

The point of sale information can also include rate of sale information, such as current sales of a product per unit of time, such as a minute, quarter hour, or longer depending on the retail environment. Still further, workers in a loading dock can be receiving and recording receipt of product available for restocking, but not yet on the shelves. Such information can be obtained via voice or scanner, keyboard, touchscreen, or other method. Thus, the information received by the computer system 500 at 310 can include real time information concerning the amount of product currently on shelves, product already purchased, rates of purchases, and inventory available for restocking.

In traditional retail store inventory management systems, product is usually restocked as it arrives. While workflow can be interrupted by a customer request when the customer observes that a shelf where the product should be displayed is empty, there is no systematic method for optimal restocking.

At 320, the information received by the computer system 500 at 310 is processed to determine an optimal restocking workflow. The optimal restocking workflow can be determined by many different factors, such as products that are out of stock in the retail space being given a high priority, and products currently in stock in the retail space being given a lower priority. Further priority can be based on the rate of sales of each product and a projected time when the retail space will be out of stock. Still further algorithms can include product profitability, and ensure that highest profit margin products are sufficiently restocked such that an empty shelf of that product will not be encountered. Thus, even if there is currently stock of a high profit margin product in the retail space, the rate of sale of such a product can indicate that it will soon be out of stock, and should be restocked quickly.

At 330, a prioritized list of restocking tasks can be generated by the computer system 500 and converted into workflow activities. The list can be prioritized to minimize the amount of empty shelf space for quick-selling items. Faster moving product can be higher in the list than slower moving product. In some embodiments, high profit margin product can by higher in the list than slower moving product when other information about such products is equal. In an embodiment, a slower moving product can be allowed to sell out and the corresponding shelf space to be empty for a period of time, if it is unlikely that a customer will purchase the item before a regularly scheduled restocking activity for that item will take place.

Weighting of the information can be assigned in some embodiments in accordance with retail store management priorities. Such priorities can take into account profitability, core values, themes, advertised specials, etc. In further embodiments, store management can designate a prioritized order of products with different parameters defining restocking priorities. In other words, in an embodiment, a high priority product can generally not be selected for restocking over a lower priority product if there is sufficient inventory of the higher priority product based the current rate of sale for that higher priority product, even though more of the higher priority product was just received at the loading dock. In another embodiment, a lower priority product can generally not be selected for regularly scheduled restocking over the higher priority product, if it is likely the higher priority product stock will be depleted before regularly scheduled restocking activity for the higher priority product will take place.

At 340, workflow activities can be introduced into the workflow tasks of one or more workers specifying restocking activities. While restocking occurs, inventory activities can also be conducted to provide further information back to the computer system 500, allowing recalculations of priorities and modifications to lists of workflow activities. The activities can be part of a new list of activities for a worker, or can be surprise activities selected for a most appropriate worker as described further below. Thus, at 340, the workflow tasks can be optimized based how quickly items are restocked, so that the workers can accomplish more restocking activities in less time.

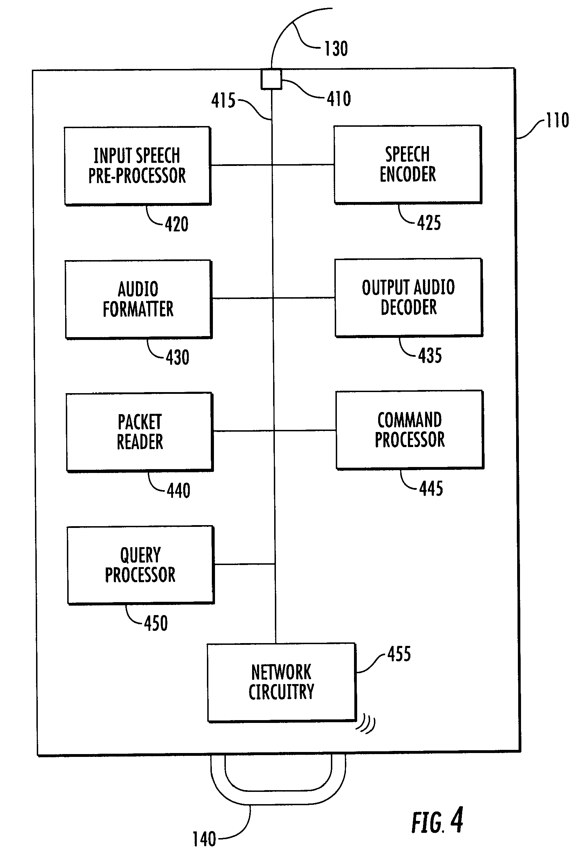

In an embodiment shown in Figure 4, the electronics module 110 includes an enclosure, such as plastic case, with a connector 410 that mates with a complimentary mating connector (not shown) on audio cable 130. An internal path 415 is used to communicate between multiple components within the electronics module 110 enclosure. In one embodiment, an input speech pre-processor (ISPP) 420 converts input speech into pre-processed speech feature data. An input speech encoder (ISENC) 425 encodes input speech for transmission to a remote terminal for reconstruction and playback and/or recording. A raw input audio sample packet formatter 430 transmits the raw input audio to a remote terminal, such as computer system 500, using an application-layer protocol to facilitate communications between the voice terminal and headset 115 as the transport mechanism. For the purposes of the transport mechanism, the formatter 430 can be abstracted to a codec type referred to as Input Audio Sample Data (IASD). An output audio decoder (OADEC) 435 decodes encoded output speech and audio for playback in the headset 115. A raw output audio sample packet reader 440 operates to receive raw audio packets from the remote terminal using the transport mechanism. For the purposes of the transport mechanism, this formatter 430 can be abstracted to a codec type referred to as Output Audio Sample Data (OASD). A command processor 445 adjusts the headset 115 hardware (e.g., input hardware gain level) under control of a remote terminal 500. A query processor 450 allows a remote terminal 500 to retrieve information regarding headset operational status and configuration. Path 415 is also coupled to network circuitry 455 to communicate via wired or wireless protocol with terminal 500. The ISPP 420, ISENC 425, and raw input audio formatter 430 are sources of communication packets used in the transport mechanism; the OADEC 435 and raw output audio reader 440 are packet sinks. The command and query processors 445,450 are both packet sinks as well as sources (in general they generate acknowledgement or response packets).

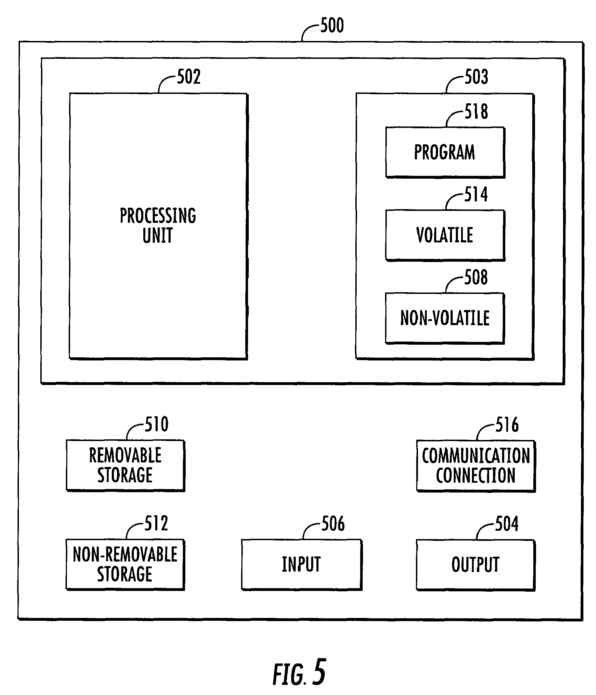

In an embodiment shown in Figure 5, the computer system 500 implements components and methods of the distributed headset 100. Each of the following components may be used in various combinations, in various embodiments. For example, the computer system 500, can include one or more of a processing unit 502, memory 503, removable storage 510, and non-removable storage 512. Although the example computing device is illustrated and described as computer system 500, the computing device can be in different forms in different embodiments. For example, the computing device can also be a laptop, desktop, server, smartphone, a tablet, headset, smartwatch, or other computing device including the same or similar elements as illustrated and described with regard to Figure 5. Devices such as smartphones, tablets, headsets, and smartwatches are generally collectively referred to as mobile devices. Further, although the various data storage elements are illustrated as part of the computer 500, the storage can also or alternatively include cloud-based storage accessible via a network, such as the Internet.

Memory 503 can include volatile memory 514 and non-volatile memory 508. Computer 500 can include, or have access to a computing environment that includes, a variety of computer-readable media, such as volatile memory 514 and non-volatile memory 508, removable storage 510 and non-removable storage 512. Computer storage includes random access memory (RAM), read only memory (ROM), erasable programmable read-only memory (EPROM) & electrically erasable programmable read-only memory (EEPROM), flash memory or other memory technologies, compact disc read-only memory (CD ROM), Digital Versatile Disks (DVD) or other optical disk storage, magnetic cassettes, magnetic tape, magnetic disk storage or other magnetic storage devices, or any other medium capable of storing computer-readable instructions.

Computer 500 can include or have access to a computing environment that includes input 506, output 504, and a communication connection 516. Output 504 can include a display device, such as a touchscreen, that also can serve as an input device. The input 506 can include one or more of a touchscreen, touchpad, mouse, keyboard, camera, one or more device-specific buttons, one or more sensors integrated within or coupled via wired or wireless data connections to the computer 500, and other input devices. The computer can operate in a networked environment using a communication connection to connect to one or more remote computers, such as database servers. The remote computer can include a personal computer (PC), server, router, network PC, a peer device or other common network node, or the like. The communication connection can include a Local Area Network (LAN), a Wide Area Network (WAN), cellular, WiFi, Bluetooth, or other networks.

Computer-readable instructions stored on a computer-readable medium are executable by the processing unit 502 of the computer 500. A hard drive, CD-ROM, and RAM are some examples of articles including a non-transitory computer-readable medium such as a storage device. The terms computer-readable medium and storage device do not include carrier waves. For example, a computer program 518 capable of providing a generic technique to perform access control check for data access and/or for doing an operation on one of the servers in a component object model (COM) based system can be included on a CD-ROM and loaded from the CD-ROM to a hard drive. The computer-readable instructions allow computer 500 to provide generic access controls in a COM based computer network system having multiple users and servers.

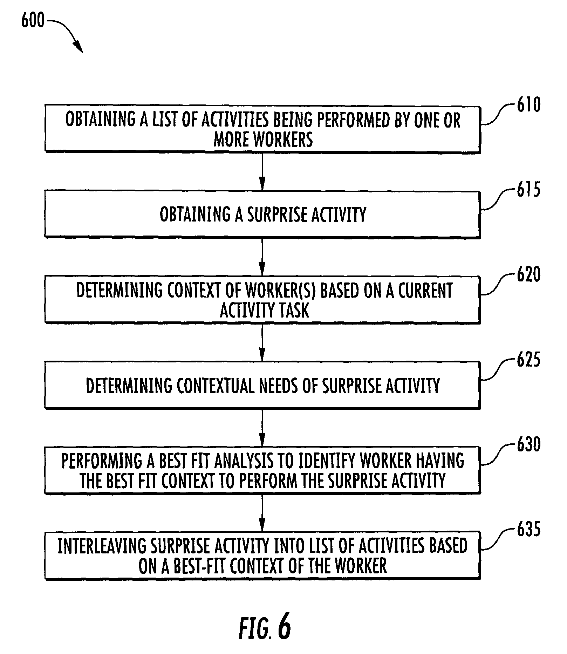

In an embodiment shown in Figure 6, a method 600 of interleaving activities is shown as a flowchart. Method 600 includes obtaining a list of activities being performed by a worker at 610. At 615, a surprise activity, such as one or more restocking activities can be obtained. The surprise activity can be generated by manager or operator, a system having generated a prioritized list of restocking workflow activities, or other user, or can also be based on process control system determination from sensors, such as in an industrial plant setting. Sensors in a retail or distribution center can detect a spill or other event that needs attention, and automatically generate an activity to address the event. At 620, a context of the worker or workers can be determined based on a current activity task. The context can also include a current location of the worker, a training level of the worker, and equipment carried by the worker. At 625, contextual needs of the surprise activity can be determined. Such contextual needs can include a current location of the surprise activity and training level and equipment needed by a worker to perform the surprise activity. A context of the worker or workers based on a current activity task, or activity task to be performed is compared at 620 to contextual needs of the surprise activity. At 630, a best fit analysis can be performed to identify the worker having the best fit context to perform the surprise task. At 635, the surprise activity is interleaved into the list of activities based on a best-fit context of the worker.

In an embodiment, obtaining a list of activities being performed by a worker includes obtaining multiple lists of activities for multiple workers at 610. Interleaving of the surprise activity at 625 can be based on a best fit context of the multiple workers, or on a next or future activity of the workers. In an embodiment, the context of the worker and contextual needs of the surprise activity include a prioritization of the activities.

The context and contextual needs can also include a current location of the worker and a location of the surprise activity. In one embodiment, the worker currently closest to the location of the surprise activity is the worker selected for performing the surprise activity. In another embodiment, the worker currently closest to the location of the surprise activity is the worker selected for performing the surprise activity if the worker context is indicative of the worker being qualified and having a required tool to perform the surprise activity.

The context and contextual needs can also include a training level of the worker and can further include equipment needed to accomplish the surprise activity, such as a label printer or cleaning supplies. The context of the worker can also include the context at multiple remaining activities in the worker's list of activities, and wherein the surprise task is interleaved after a future activity in the list of activities having the best fit context.

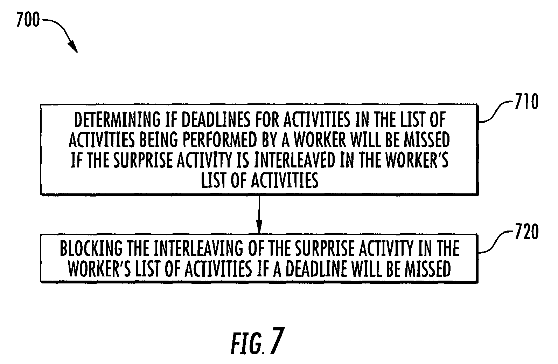

In an embodiment shown in Figure 7, a method 700 can further include determining at 710 if deadlines for activities in the list of activities being performed by a worker will be missed if the surprise activity is interleaved in the worker's list of activities, and at 720 blocking the interleaving of the surprise activity in the worker's list of activities if a deadline will be missed.

To supplement the present disclosure, this application incorporates entirely by reference the following patents, patent application publications, and patent applications:
U.S. Patent No. 6,832,725; U.S. Patent No. 7,128,266;
U.S. Patent No. 7,159,783; U.S. Patent No. 7,413,127;
U.S. Patent No. 7,726,575; U.S. Patent No. 8,294,969;
U.S. Patent No. 8,317,105; U.S. Patent No. 8,322,622;
U.S. Patent No. 8,366,005; U.S. Patent No. 8,371,507;
U.S. Patent No. 8,376,233; U.S. Patent No. 8,381,979;
U.S. Patent No. 8,390,909; U.S. Patent No. 8,408,464;
U.S. Patent No. 8,408,468; U.S. Patent No. 8,408,469;
U.S. Patent No. 8,424,768; U.S. Patent No. 8,448,863;
U.S. Patent No. 8,457,013; U.S. Patent No. 8,459,557;
U.S. Patent No. 8,469,272; U.S. Patent No. 8,474,712;
U.S. Patent No. 8,479,992; U.S. Patent No. 8,490,877;
U.S. Patent No. 8,517,271; U.S. Patent No. 8,523,076;
U.S. Patent No. 8,528,818; U.S. Patent No. 8,544,737;
U.S. Patent No. 8,548,242; U.S. Patent No. 8,548,420;
U.S. Patent No. 8,550,335; U.S. Patent No. 8,550,354;
U.S. Patent No. 8,550,357; U.S. Patent No. 8,556,174;
U.S. Patent No. 8,556,176; U.S. Patent No. 8,556,177;
U.S. Patent No. 8,559,767; U.S. Patent No. 8,599,957;
U.S. Patent No. 8,561,895; U.S. Patent No. 8,561,903;
U.S. Patent No. 8,561,905; U.S. Patent No. 8,565,107;
U.S. Patent No. 8,571,307; U.S. Patent No. 8,579,200;
U.S. Patent No. 8,583,924; U.S. Patent No. 8,584,945;
U.S. Patent No. 8,587,595; U.S. Patent No. 8,587,697;
U.S. Patent No. 8,588,869; U.S. Patent No. 8,590,789;
U.S. Patent No. 8,596,539; U.S. Patent No. 8,596,542;
U.S. Patent No. 8,596,543; U.S. Patent No. 8,599,271;
U.S. Patent No. 8,599,957; U.S. Patent No. 8,600,158;
U.S. Patent No. 8,600,167; U.S. Patent No. 8,602,309;
U.S. Patent No. 8,608,053; U.S. Patent No. 8,608,071;
U.S. Patent No. 8,611,309; U.S. Patent No. 8,615,487;
U.S. Patent No. 8,616,454; U.S. Patent No. 8,621,123;
U.S. Patent No. 8,622,303; U.S. Patent No. 8,628,013;
U.S. Patent No. 8,628,015; U.S. Patent No. 8,628,016;
U.S. Patent No. 8,629,926; U.S. Patent No. 8,630,491;
U.S. Patent No. 8,635,309; U.S. Patent No. 8,636,200;
U.S. Patent No. 8,636,212; U.S. Patent No. 8,636,215;
U.S. Patent No. 8,636,224; U.S. Patent No. 8,638,806;
U.S. Patent No. 8,640,958; U.S. Patent No. 8,640,960;
U.S. Patent No. 8,643,717; U.S. Patent No. 8,646,692;
U.S. Patent No. 8,646,694; U.S. Patent No. 8,657,200;
U.S. Patent No. 8,659,397; U.S. Patent No. 8,668,149;
U.S. Patent No. 8,678,285; U.S. Patent No. 8,678,286;
U.S. Patent No. 8,682,077; U.S. Patent No. 8,687,282;
U.S. Patent No. 8,692,927; U.S. Patent No. 8,695,880;
U.S. Patent No. 8,698,949; U.S. Patent No. 8,717,494;
U.S. Patent No. 8,717,494; U.S. Patent No. 8,720,783;
U.S. Patent No. 8,723,804; U.S. Patent No. 8,723,904;
U.S. Patent No. 8,727,223; U.S. Patent No. D702,237;
U.S. Patent No. 8,740,082; U.S. Patent No. 8,740,085;
U.S. Patent No. 8,746,563; U.S. Patent No. 8,750,445;
U.S. Patent No. 8,752,766; U.S. Patent No. 8,756,059;
U.S. Patent No. 8,757,495; U.S. Patent No. 8,760,563;
U.S. Patent No. 8,763,909; U.S. Patent No. 8,777,108;
U.S. Patent No. 8,777,109; U.S. Patent No. 8,779,898;
U.S. Patent No. 8,781,520; U.S. Patent No. 8,783,573;
U.S. Patent No. 8,789,757; U.S. Patent No. 8,789,758;
U.S. Patent No. 8,789,759; U.S. Patent No. 8,794,520;
U.S. Patent No. 8,794,522; U.S. Patent No. 8,794,525;
U.S. Patent No. 8,794,526; U.S. Patent No. 8,798,367;
U.S. Patent No. 8,807,431; U.S. Patent No. 8,807,432;
U.S. Patent No. 8,820,630; U.S. Patent No. 8,822,848;
U.S. Patent No. 8,824,692; U.S. Patent No. 8,824,696;
U.S. Patent No. 8,842,849; U.S. Patent No. 8,844,822;
U.S. Patent No. 8,844,823; U.S. Patent No. 8,849,019;
U.S. Patent No. 8,851,383; U.S. Patent No. 8,854,633;
U.S. Patent No. 8,866,963; U.S. Patent No. 8,868,421;
U.S. Patent No. 8,868,519; U.S. Patent No. 8,868,802;
U.S. Patent No. 8,868,803; U.S. Patent No. 8,870,074;
U.S. Patent No. 8,879,639; U.S. Patent No. 8,880,426;
U.S. Patent No. 8,881,983; U.S. Patent No. 8,881,987;
U.S. Patent No. 8,903,172; U.S. Patent No. 8,908,995;
U.S. Patent No. 8,910,870; U.S. Patent No. 8,910,875;
U.S. Patent No. 8,914,290; U.S. Patent No. 8,914,788;
U.S. Patent No. 8,915,439; U.S. Patent No. 8,915,444;
U.S. Patent No. 8,916,789; U.S. Patent No. 8,918,250;
U.S. Patent No. 8,918,564; U.S. Patent No. 8,925,818;
U.S. Patent No. 8,939,374; U.S. Patent No. 8,942,480;
U.S. Patent No. 8,944,313; U.S. Patent No. 8,944,327;
U.S. Patent No. 8,944,332; U.S. Patent No. 8,950,678;
U.S. Patent No. 8,967,468; U.S. Patent No. 8,971,346;
U.S. Patent No. 8,976,030; U.S. Patent No. 8,976,368;
U.S. Patent No. 8,978,981; U.S. Patent No. 8,978,983;
U.S. Patent No. 8,978,984; U.S. Patent No. 8,985,456;
U.S. Patent No. 8,985,457; U.S. Patent No. 8,985,459;
U.S. Patent No. 8,985,461; U.S. Patent No. 8,988,578;
U.S. Patent No. 8,988,590; U.S. Patent No. 8,991,704;
U.S. Patent No. 8,996,194; U.S. Patent No. 8,996,384;
U.S. Patent No. 9,002,641; U.S. Patent No. 9,007,368;
U.S. Patent No. 9,010,641; U.S. Patent No. 9,015,513;
U.S. Patent No. 9,016,576; U.S. Patent No. 9,022,288;
U.S. Patent No. 9,030,964; U.S. Patent No. 9,033,240;
U.S. Patent No. 9,033,242; U.S. Patent No. 9,036,054;
U.S. Patent No. 9,037,344; U.S. Patent No. 9,038,911;
U.S. Patent No. 9,038,915; U.S. Patent No. 9,047,098;
U.S. Patent No. 9,047,359; U.S. Patent No. 9,047,420;
U.S. Patent No. 9,047,525; U.S. Patent No. 9,047,531;
U.S. Patent No. 9,053,055; U.S. Patent No. 9,053,378;
U.S. Patent No. 9,053,380; U.S. Patent No. 9,058,526;
U.S. Patent No. 9,064,165; U.S. Patent No. 9,064,167;
U.S. Patent No. 9,064,168; U.S. Patent No. 9,064,254;
U.S. Patent No. 9,066,032; U.S. Patent No. 9,070,032;
U.S. Design Patent No. D716,285;
U.S. Design Patent No. D723,560;
U.S. Design Patent No. D730,357;
U.S. Design Patent No. D730,901;
U.S. Design Patent No. D730,902;
U.S. Design Patent No. D733,112;
U.S. Design Patent No. D734,339;
International Publication No. 2013/163789;
International Publication No. 2013/173985;
International Publication No. 2014/019130;
International Publication No. 2014/110495;
U.S. Patent Application Publication No. 2008/0185432;
U.S. Patent Application Publication No. 2009/0134221;
U.S. Patent Application Publication No. 2010/0177080;
U.S. Patent Application Publication No. 2010/0177076;
U.S. Patent Application Publication No. 2010/0177707;
U.S. Patent Application Publication No. 2010/0177749;
U.S. Patent Application Publication No. 2010/0265880;
U.S. Patent Application Publication No. 2011/0202554;
U.S. Patent Application Publication No. 2012/0111946;
U.S. Patent Application Publication No. 2012/0168511;
U.S. Patent Application Publication No. 2012/0168512;
U.S. Patent Application Publication No. 2012/0193423;
U.S. Patent Application Publication No. 2012/0203647;
U.S. Patent Application Publication No. 2012/0223141;
U.S. Patent Application Publication No. 2012/0228382;
U.S. Patent Application Publication No. 2012/0248188;
U.S. Patent Application Publication No. 2013/0043312;
U.S. Patent Application Publication No. 2013/0082104;
U.S. Patent Application Publication No. 2013/0175341;
U.S. Patent Application Publication No. 2013/0175343;
U.S. Patent Application Publication No. 2013/0257744;
U.S. Patent Application Publication No. 2013/0257759;
U.S. Patent Application Publication No. 2013/0270346;
U.S. Patent Application Publication No. 2013/0287258;
U.S. Patent Application Publication No. 2013/0292475;
U.S. Patent Application Publication No. 2013/0292477;
U.S. Patent Application Publication No. 2013/0293539;
U.S. Patent Application Publication No. 2013/0293540;
U.S. Patent Application Publication No. 2013/0306728;
U.S. Patent Application Publication No. 2013/0306731;
U.S. Patent Application Publication No. 2013/0307964;
U.S. Patent Application Publication No. 2013/0308625;
U.S. Patent Application Publication No. 2013/0313324;
U.S. Patent Application Publication No. 2013/0313325;
U.S. Patent Application Publication No. 2013/0342717;
U.S. Patent Application Publication No. 2014/0001267;
U.S. Patent Application Publication No. 2014/0008439;
U.S. Patent Application Publication No. 2014/0025584;
U.S. Patent Application Publication No. 2014/0034734;
U.S. Patent Application Publication No. 2014/0036848;
U.S. Patent Application Publication No. 2014/0039693;
U.S. Patent Application Publication No. 2014/0042814;
U.S. Patent Application Publication No. 2014/0049120;
U.S. Patent Application Publication No. 2014/0049635;
U.S. Patent Application Publication No. 2014/0061306;
U.S. Patent Application Publication No. 2014/0063289;
U.S. Patent Application Publication No. 2014/0066136;
U.S. Patent Application Publication No. 2014/0067692;
U.S. Patent Application Publication No. 2014/0070005;
U.S. Patent Application Publication No. 2014/0071840;
U.S. Patent Application Publication No. 2014/0074746;
U.S. Patent Application Publication No. 2014/0076974;
U.S. Patent Application Publication No. 2014/0078341;
U.S. Patent Application Publication No. 2014/0078345;
U.S. Patent Application Publication No. 2014/0097249;
U.S. Patent Application Publication No. 2014/0098792;
U.S. Patent Application Publication No. 2014/0100813;
U.S. Patent Application Publication No. 2014/0103115;
U.S. Patent Application Publication No. 2014/0104413;
U.S. Patent Application Publication No. 2014/0104414;
U.S. Patent Application Publication No. 2014/0104416;
U.S. Patent Application Publication No. 2014/0104451;
U.S. Patent Application Publication No. 2014/0106594;
U.S. Patent Application Publication No. 2014/0106725;
U.S. Patent Application Publication No. 2014/0108010;
U.S. Patent Application Publication No. 2014/0108402;
U.S. Patent Application Publication No. 2014/0110485;
U.S. Patent Application Publication No. 2014/0114530;
U.S. Patent Application Publication No. 2014/0124577;
U.S. Patent Application Publication No. 2014/0124579;
U.S. Patent Application Publication No. 2014/0125842;
U.S. Patent Application Publication No. 2014/0125853;
U.S. Patent Application Publication No. 2014/0125999;
U.S. Patent Application Publication No. 2014/0129378;
U.S. Patent Application Publication No. 2014/0131438;
U.S. Patent Application Publication No. 2014/0131441;
U.S. Patent Application Publication No. 2014/0131443;
U.S. Patent Application Publication No. 2014/0131444;
U.S. Patent Application Publication No. 2014/0131445;
U.S. Patent Application Publication No. 2014/0131448;
U.S. Patent Application Publication No. 2014/0133379;
U.S. Patent Application Publication No. 2014/0136208;
U.S. Patent Application Publication No. 2014/0140585;
U.S. Patent Application Publication No. 2014/0151453;
U.S. Patent Application Publication No. 2014/0152882;
U.S. Patent Application Publication No. 2014/0158770;
U.S. Patent Application Publication No. 2014/0159869;
U.S. Patent Application Publication No. 2014/0166755;
U.S. Patent Application Publication No. 2014/0166759;
U.S. Patent Application Publication No. 2014/0168787;
U.S. Patent Application Publication No. 2014/0175165;
U.S. Patent Application Publication No. 2014/0175172;
U.S. Patent Application Publication No. 2014/0191644;
U.S. Patent Application Publication No. 2014/0191913;
U.S. Patent Application Publication No. 2014/0197238;
U.S. Patent Application Publication No. 2014/0197239;
U.S. Patent Application Publication No. 2014/0197304;
U.S. Patent Application Publication No. 2014/0214631;
U.S. Patent Application Publication No. 2014/0217166;
U.S. Patent Application Publication No. 2014/0217180;
U.S. Patent Application Publication No. 2014/0231500;
U.S. Patent Application Publication No. 2014/0232930;
U.S. Patent Application Publication No. 2014/0247315;
U.S. Patent Application Publication No. 2014/0263493;
U.S. Patent Application Publication No. 2014/0263645;
U.S. Patent Application Publication No. 2014/0267609;
U.S. Patent Application Publication No. 2014/0270196;
U.S. Patent Application Publication No. 2014/0270229;
U.S. Patent Application Publication No. 2014/0278387;
U.S. Patent Application Publication No. 2014/0278391;
U.S. Patent Application Publication No. 2014/0282210;
U.S. Patent Application Publication No. 2014/0284384;
U.S. Patent Application Publication No. 2014/0288933;
U.S. Patent Application Publication No. 2014/0297058;
U.S. Patent Application Publication No. 2014/0299665;
U.S. Patent Application Publication No. 2014/0312121;
U.S. Patent Application Publication No. 2014/0319220;
U.S. Patent Application Publication No. 2014/0319221;
U.S. Patent Application Publication No. 2014/0326787;
U.S. Patent Application Publication No. 2014/0332590;
U.S. Patent Application Publication No. 2014/0344943;
U.S. Patent Application Publication No. 2014/0346233;
U.S. Patent Application Publication No. 2014/0351317;
U.S. Patent Application Publication No. 2014/0353373;
U.S. Patent Application Publication No. 2014/0361073;
U.S. Patent Application Publication No. 2014/0361082;
U.S. Patent Application Publication No. 2014/0362184;
U.S. Patent Application Publication No. 2014/0363015;
U.S. Patent Application Publication No. 2014/0369511;
U.S. Patent Application Publication No. 2014/0374483;
U.S. Patent Application Publication No. 2014/0374485;
U.S. Patent Application Publication No. 2015/0001301;
U.S. Patent Application Publication No. 2015/0001304;
U.S. Patent Application Publication No. 2015/0003673;
U.S. Patent Application Publication No. 2015/0009338;
U.S. Patent Application Publication No. 2015/0009610;
U.S. Patent Application Publication No. 2015/0014416;
U.S. Patent Application Publication No. 2015/0021397;
U.S. Patent Application Publication No. 2015/0028102;
U.S. Patent Application Publication No. 2015/0028103;
U.S. Patent Application Publication No. 2015/0028104;
U.S. Patent Application Publication No. 2015/0029002;
U.S. Patent Application Publication No. 2015/0032709;
U.S. Patent Application Publication No. 2015/0039309;
U.S. Patent Application Publication No. 2015/0039878;
U.S. Patent Application Publication No. 2015/0040378;
U.S. Patent Application Publication No. 2015/0048168;
U.S. Patent Application Publication No. 2015/0049347;
U.S. Patent Application Publication No. 2015/0051992;
U.S. Patent Application Publication No. 2015/0053766;
U.S. Patent Application Publication No. 2015/0053768;
U.S. Patent Application Publication No. 2015/0053769;
U.S. Patent Application Publication No. 2015/0060544;
U.S. Patent Application Publication No. 2015/0062366;
U.S. Patent Application Publication No. 2015/0063215;
U.S. Patent Application Publication No. 2015/0063676;
U.S. Patent Application Publication No. 2015/0069130;
U.S. Patent Application Publication No. 2015/0071819;
U.S. Patent Application Publication No. 2015/0083800;
U.S. Patent Application Publication No. 2015/0086114;
U.S. Patent Application Publication No. 2015/0088522;
U.S. Patent Application Publication No. 2015/0096872;
U.S. Patent Application Publication No. 2015/0099557;
U.S. Patent Application Publication No. 2015/0100196;
U.S. Patent Application Publication No. 2015/0102109;
U.S. Patent Application Publication No. 2015/0115035;
U.S. Patent Application Publication No. 2015/0127791;
U.S. Patent Application Publication No. 2015/0128116;
U.S. Patent Application Publication No. 2015/0129659;
U.S. Patent Application Publication No. 2015/0133047;
U.S. Patent Application Publication No. 2015/0134470;
U.S. Patent Application Publication No. 2015/0136851;
U.S. Patent Application Publication No. 2015/0136854;
U.S. Patent Application Publication No. 2015/0142492;
U.S. Patent Application Publication No. 2015/0144692;
U.S. Patent Application Publication No. 2015/0144698;
U.S. Patent Application Publication No. 2015/0144701;
U.S. Patent Application Publication No. 2015/0149946;
U.S. Patent Application Publication No. 2015/0161429;
U.S. Patent Application Publication No. 2015/0169925;
U.S. Patent Application Publication No. 2015/0169929;
U.S. Patent Application Publication No. 2015/0178523;
U.S. Patent Application Publication No. 2015/0178534;
U.S. Patent Application Publication No. 2015/0178535;
U.S. Patent Application Publication No. 2015/0178536;
U.S. Patent Application Publication No. 2015/0178537;
U.S. Patent Application Publication No. 2015/0181093;
U.S. Patent Application Publication No. 2015/0181109;
U.S. Patent Application No. 13/367,978 for a *Laser Scanning Module Employing an Elastomeric U-Hinge Based Laser Scanning Assembly,* filed February 7, 2012 (Feng *et al.*);
U.S. Patent Application No. 29/458,405 for an *Electronic Device,* filed June 19, 2013 (Fitch *et al*.);
U.S. Patent Application No. 29/459,620 for an *Electronics Device Enclosure,* filed July 2, 2013 (London *et al*.);
U.S. Patent Application No. 29/468,118 for an *Electronic Device Case,* filed September 26, 2013 (Oberpriller *et al*.);
U.S. Patent Application No. 14/150,393 for *Indicia-reader Having Unitary Construction Scanner,* filed January 8, 2014 (Colavito *et al*.);
U.S. Patent Application No. 14/200,405 for *Indicia Reader for Size-Limited Applications* filed March 7, 2014 (Feng *et al*.);
U.S. Patent Application No. 14/231,898 for *Hand-Mounted Indicia-Reading Device with Finger Motion Triggering* filed April 1, 2014 (Van Horn *et al*.);
U.S. Patent Application No. 29/486,759 for an Imaging Terminal, filed April 2, 2014 (Oberpriller et al.);
U.S. Patent Application No. 14/257,364 for *Docking System and Method Using Near Field Communication* filed April 21, 2014 (Showering);
U.S. Patent Application No. 14/264,173 for *Autofocus Lens System for Indicia Readers* filed April 29, 2014 (Ackley *et al*.);
U.S. Patent Application No. 14/277,337 *for MULTIPURPOSE OPTICAL READER, filed May 14, 2014 (Jovanovski et al*.);
U.S. Patent Application No. 14/283,282 *for TERMINAL HAVING ILLUMINATION AND FOCUS CONTROL filed May 21, 2014 (Liu et al.);*
U.S. Patent Application No. 14/327,827 for a MOBILE-PHONE ADAPTER FOR ELECTRONIC TRANSACTIONS, filed July 10, 2014 (Hejl);
U.S. Patent Application No. 14/334,934 for a SYSTEM AND METHOD FOR INDICIA VERIFICATION, filed July 18, 2014 (Hejl);
U.S. Patent Application No. 14/339,708 for LASER SCANNING CODE SYMBOL READING SYSTEM, filed July 24, 2014 (Xian et al.);
U.S. Patent Application No. 14/340,627 for an AXIALLY REINFORCED FLEXIBLE SCAN ELEMENT, filed July 25, 2014 (Rueblinger et al.);
U.S. Patent Application No. 14/446,391 for MULTIFUNCTION POINT OF SALE APPARATUS WITH OPTICAL SIGNATURE CAPTURE filed July 30, 2014 (Good et *al*.);
U.S. Patent Application No. 14/452,697 for INTERACTIVE INDICIA READER, filed August 6, 2014 (Todeschini);
U.S. Patent Application No. 14/453,019 for DIMENSIONING SYSTEM WITH GUIDED ALIGNMENT, filed August 6, 2014 (Li et al.);
U.S. Patent Application No. 14/462,801 for MOBILE COMPUTING DEVICE WITH DATA COGNITION SOFTWARE, filed on August 19, 2014 (Todeschini et al.);
U.S. Patent Application No. 14/483,056 for VARIABLE DEPTH OF FIELD BARCODE SCANNER filed Sep. 10, 2014 (McCloskey et al.);
U.S. Patent Application No. 14/513,808 for IDENTIFYING INVENTORY ITEMS IN A STORAGE FACILITY filed Oct. 14, 2014 (Singel et al.);
U.S. Patent Application No. 14/519,195 for HANDHELD DIMENSIONING SYSTEM WITH FEEDBACK filed Oct. 21, 2014 (Laffargue et al.);
U.S. Patent Application No. 14/519,179 for DIMENSIONING SYSTEM WITH MULTIPATH INTERFERENCE MITIGATION filed Oct. 21, 2014 (Thuries et al.);
U.S. Patent Application No. 14/519,211 for SYSTEM AND METHOD FOR DIMENSIONING filed Oct. 21, 2014 (Ackley et al.);
U.S. Patent Application No. 14/519,233 for HANDHELD DIMENSIONER WITH DATA-QUALITY INDICATION filed Oct. 21, 2014 (Laffargue et al.);
U.S. Patent Application No. 14/519,249 for HANDHELD DIMENSIONING SYSTEM WITH MEASUREMENT-CONFORMANCE FEEDBACK filed Oct. 21, 2014 (Ackley et al.);
U.S. Patent Application No. 14/527,191 for METHOD AND SYSTEM FOR RECOGNIZING SPEECH USING WILDCARDS IN AN EXPECTED RESPONSE filed Oct. 29, 2014 (Braho et al.);
U.S. Patent Application No. 14/529,563 for ADAPTABLE INTERFACE FOR A MOBILE COMPUTING DEVICE filed Oct. 31, 2014 (Schoon et al.);
U.S. Patent Application No. 14/529,857 for BARCODE READER WITH SECURITY FEATURES filed October 31, 2014 (Todeschini et al.);
U.S. Patent Application No. 14/398,542 for PORTABLE ELECTRONIC DEVICES HAVING A SEPARATE LOCATION TRIGGER UNIT FOR USE IN CONTROLLING AN APPLICATION UNIT filed November 3, 2014 (Bian et al.);
U.S. Patent Application No. 14/531,154 for DIRECTING AN INSPECTOR THROUGH AN INSPECTION filed Nov. 3, 2014 (Miller et al.);
U.S. Patent Application No. 14/533,319 for BARCODE SCANNING SYSTEM USING WEARABLE DEVICE WITH EMBEDDED CAMERA filed Nov. 5, 2014 (Todeschini);
U.S. Patent Application No. 14/535,764 for CONCATENATED EXPECTED RESPONSES FOR SPEECH RECOGNITION filed Nov. 7, 2014 (Braho et al.);
U.S. Patent Application No. 14/568,305 for AUTO-CONTRAST VIEWFINDER FOR AN INDICIA READER filed Dec. 12, 2014 (Todeschini);
U.S. Patent Application No. 14/573,022 for DYNAMIC DIAGNOSTIC INDICATOR GENERATION filed Dec. 17, 2014 (Goldsmith);
U.S. Patent Application No. 14/578,627 for SAFETY SYSTEM AND METHOD filed Dec. 22, 2014 (Ackley et al.);
U.S. Patent Application No. 14/580,262 for MEDIA GATE FOR THERMAL TRANSFER PRINTERS filed Dec. 23, 2014 (Bowles);
U.S. Patent Application No. 14/590,024 for SHELVING AND PACKAGE LOCATING SYSTEMS FOR DELIVERY VEHICLES filed January 6, 2015 (Payne);
U.S. Patent Application No. 14/596,757 for SYSTEM AND METHOD FOR DETECTING BARCODE PRINTING ERRORS filed Jan. 14, 2015 (Ackley);
U.S. Patent Application No. 14/416,147 for OPTICAL READING APPARATUS HAVING VARIABLE SETTINGS filed January 21, 2015 (Chen et al.);
U.S. Patent Application No. 14/614,706 for DEVICE FOR SUPPORTING AN ELECTRONIC TOOL ON A USER'S HAND filed Feb. 5, 2015 (Oberpriller et al.);
U.S. Patent Application No. 14/614,796 for CARGO APPORTIONMENT TECHNIQUES filed Feb. 5, 2015 (Morton et al.);
U.S. Patent Application No. 29/516,892 for TABLE COMPUTER filed Feb. 6, 2015 (Bidwell et al.);
U.S. Patent Application No. 14/619,093 for METHODS FOR TRAINING A SPEECH RECOGNITION SYSTEM filed Feb. 11, 2015 (Pecorari);
U.S. Patent Application No. 14/628,708 for DEVICE, SYSTEM, AND METHOD FOR DETERMINING THE STATUS OF CHECKOUT LANES filed Feb. 23, 2015 (Todeschini);
U.S. Patent Application No. 14/630,841 for TERMINAL INCLUDING IMAGING ASSEMBLY filed Feb. 25, 2015 (Gomez et al.);
U.S. Patent Application No. 14/635,346 for SYSTEM AND METHOD FOR RELIABLE STORE-AND-FORWARD DATA HANDLING BY ENCODED INFORMATION READING TERMINALS filed March 2, 2015 (Sevier);
U.S. Patent Application No. 29/519,017 for SCANNER filed March 2, 2015 (Zhou et al.);
U.S. Patent Application No. 14/405,278 for DESIGN PATTERN FOR SECURE STORE filed March 9, 2015 (Zhu et al.);
U.S. Patent Application No. 14/660,970 for DECODABLE INDICIA READING TERMINAL WITH COMBINED ILLUMINATION filed March 18, 2015 (Kearney et al.);
U.S. Patent Application No. 14/661,013 for REPROGRAMMING SYSTEM AND METHOD FOR DEVICES INCLUDING PROGRAMMING SYMBOL filed March 18, 2015 (Soule et al.);
U.S. Patent Application No. 14/662,922 for MULTIFUNCTION POINT OF SALE SYSTEM filed March 19, 2015 (Van Horn et al.);
U.S. Patent Application No. 14/663,638 for VEHICLE MOUNT COMPUTER WITH CONFIGURABLE IGNITION SWITCH BEHAVIOR filed March 20, 2015 (Davis et al.);
U.S. Patent Application No. 14/664,063 for METHOD AND APPLICATION FOR SCANNING A BARCODE WITH A SMART DEVICE WHILE CONTINUOUSLY RUNNING AND DISPLAYING AN APPLICATION ON THE SMART DEVICE DISPLAY filed March 20, 2015 (Todeschini);
U.S. Patent Application No. 14/669,280 for TRANSFORMING COMPONENTS OF A WEB PAGE TO VOICE PROMPTS filed March 26, 2015 (Funyak et al.);
U.S. Patent Application No. 14/674,329 for AIMER FOR BARCODE SCANNING filed March 31, 2015 (Bidwell);
U.S. Patent Application No. 14/676,109 for INDICIA READER filed April 1, 2015 (Huck);
U.S. Patent Application No. 14/676,327 for DEVICE MANAGEMENT PROXY FOR SECURE DEVICES filed April 1, 2015 (Yeakley et al.);
U.S. Patent Application No. 14/676,898 for NAVIGATION SYSTEM CONFIGURED TO INTEGRATE MOTION SENSING DEVICE INPUTS filed April 2, 2015 (Showering);
U.S. Patent Application No. 14/679,275 for DIMENSIONING SYSTEM CALIBRATION SYSTEMS AND METHODS filed April 6, 2015 (Laffargue et al.);
U.S. Patent Application No. 29/523,098 for HANDLE FOR A TABLET COMPUTER filed April 7, 2015 (Bidwell et al.);
U.S. Patent Application No. 14/682,615 for SYSTEM AND METHOD FOR POWER MANAGEMENT OF MOBILE DEVICES filed April 9, 2015 (Murawski et al.);
U.S. Patent Application No. 14/686,822 for MULTIPLE PLATFORM SUPPORT SYSTEM AND METHOD filed April 15, 2015 (Qu et al.);
U.S. Patent Application No. 14/687,289 for SYSTEM FOR COMMUNICATION VIA A PERIPHERAL HUB filed April 15, 2015 (Kohtz et al.);
U.S. Patent Application No. 29/524,186 for SCANNER filed April 17, 2015 (Zhou et al.);
U.S. Patent Application No. 14/695,364 for MEDICATION MANAGEMENT SYSTEM filed April 24, 2015 (Sewell et al.);
U.S. Patent Application No. 14/695,923 for SECURE UNATTENDED NETWORK AUTHENTICATION filed April 24, 2015 (Kubler et al.);
U.S. Patent Application No. 29/525,068 for TABLET COMPUTER WITH REMOVABLE SCANNING DEVICE filed April 27, 2015 (Schulte et al.);
U.S. Patent Application No. 14/699,436 for SYMBOL READING SYSTEM HAVING PREDICTIVE DIAGNOSTICS filed April 29, 2015 (Nahill et al.);
U.S. Patent Application No. 14/702,110 for SYSTEM AND METHOD FOR REGULATING BARCODE DATA INJECTION INTO A RUNNING APPLICATION ON A SMART DEVICE filed May 1, 2015 (Todeschini et al.);
U.S. Patent Application No. 14/702,979 for TRACKING BATTERY CONDITIONS filed May 4, 2015 (Young et al.);
U.S. Patent Application No. 14/704,050 for INTERMEDIATE LINEAR POSITIONING filed May 5, 2015 (Charpentier et al.);
U.S. Patent Application No. 14/705,012 for HANDS-FREE HUMAN MACHINE INTERFACE RESPONSIVE TO A DRIVER OF A VEHICLE filed May 6, 2015 (Fitch et al.);
U.S. Patent Application No. 14/705,407 for METHOD AND SYSTEM TO PROTECT SOFTWARE-BASED NETWORK-CONNECTED DEVICES FROM ADVANCED PERSISTENT THREAT filed May 6, 2015 (Hussey et al.);
U.S. Patent Application No. 14/707,037 for SYSTEM AND METHOD FOR DISPLAY OF INFORMATION USING A VEHICLE-MOUNT COMPUTER filed May 8, 2015 (Chamberlin);
U.S. Patent Application No. 14/707,123 for APPLICATION INDEPENDENT DEX/UCS INTERFACE filed May 8, 2015 (Pape);
U.S. Patent Application No. 14/707,492 for METHOD AND APPARATUS FOR READING OPTICAL INDICIA USING A PLURALITY OF DATA SOURCES filed May 8, 2015 (Smith et al.);
U.S. Patent Application No. 14/710,666 for PRE-PAID USAGE SYSTEM FOR ENCODED INFORMATION READING TERMINALS filed May 13, 2015 (Smith);
U.S. Patent Application No. 29/526,918 for CHARGING BASE filed May 14, 2015 (Fitch et al.);
U.S. Patent Application No. 14/715,672 for AUGUMENTED REALITY ENABLED HAZARD DISPLAY filed May 19, 2015 (Venkatesha et al.);
U.S. Patent Application No. 14/715,916 for EVALUATING IMAGE VALUES filed May 19, 2015 (Ackley);
U.S. Patent Application No. 14/722,608 for INTERACTIVE USER INTERFACE FOR CAPTURING A DOCUMENT IN AN IMAGE SIGNAL filed May 27, 2015 (Showering et al.);
U.S. Patent Application No. 29/528,165 for IN-COUNTER BARCODE SCANNER filed May 27, 2015 (Oberpriller et al.);
U.S. Patent Application No. 14/724,134 for ELECTRONIC DEVICE WITH WIRELESS PATH SELECTION CAPABILITY filed May 28, 2015 (Wang et al.);
U.S. Patent Application No. 14/724,849 for METHOD OF PROGRAMMING THE DEFAULT CABLE INTERFACE SOFTWARE IN AN INDICIA READING DEVICE filed May 29, 2015 (Barten);
U.S. Patent Application No. 14/724,908 for IMAGING APPARATUS HAVING IMAGING ASSEMBLY filed May 29, 2015 (Barber et al.);
U.S. Patent Application No. 14/725,352 for APPARATUS AND METHODS FOR MONITORING ONE OR MORE PORTABLE DATA TERMINALS (Caballero et al.);
U.S. Patent Application No. 29/528,590 for ELECTRONIC DEVICE filed May 29, 2015 (Fitch et al.);
U.S. Patent Application No. 29/528,890 for MOBILE COMPUTER HOUSING filed June 2, 2015 (Fitch et al.);
U.S. Patent Application No. 14/728,397 for DEVICE MANAGEMENT USING VIRTUAL INTERFACES CROSS-REFERENCE TO RELATED APPLICATIONS filed June 2, 2015 (Caballero);
U.S. Patent Application No. 14/732,870 for DATA COLLECTION MODULE AND SYSTEM filed June 8, 2015 (Powilleit);
U.S. Patent Application No. 29/529,441 for INDICIA READING DEVICE filed June 8, 2015 (Zhou et al.);
U.S. Patent Application No. 14/735,717 for INDICIA-READING SYSTEMS HAVING AN INTERFACE WITH A USER'S NERVOUS SYSTEM filed June 10, 2015 (Todeschini);
U.S. Patent Application No. 14/738,038 for METHOD OF AND SYSTEM FOR DETECTING OBJECT WEIGHING INTERFERENCES filed June 12, 2015 (Amundsen et al.);
U.S. Patent Application No. 14/740,320 for TACTILE SWITCH FOR A MOBILE ELECTRONIC DEVICE filed June 16, 2015 (Bandringa);
U.S. Patent Application No. 14/740,373 for CALIBRATING A VOLUME DIMENSIONER filed June 16, 2015 (Ackley et al.);
U.S. Patent Application No. 14/742,818 for INDICIA READING SYSTEM EMPLOYING DIGITAL GAIN CONTROL filed June 18, 2015 (Xian et al.);
U.S. Patent Application No. 14/743,257 for WIRELESS MESH POINT PORTABLE DATA TERMINAL filed June 18, 2015 (Wang et al.);
U.S. Patent Application No. 29/530,600 for CYCLONE filed June 18, 2015 (Vargo et al);
U.S. Patent Application No. 14/744,633 for IMAGING APPARATUS COMPRISING IMAGE SENSOR ARRAY HAVING SHARED GLOBAL SHUTTER CIRCUITRY filed June 19, 2015 (Wang);
U.S. Patent Application No. 14/744,836 for CLOUD-BASED SYSTEM FOR READING OF DECODABLE INDICIA filed June 19, 2015 (Todeschini et al.);
U.S. Patent Application No. 14/745,006 for SELECTIVE OUTPUT OF DECODED MESSAGE DATA filed June 19, 2015 (Todeschini et al.);
U.S. Patent Application No. 14/747,197 for OPTICAL PATTERN PROJECTOR filed June 23, 2015 (Thuries et al.);
U.S. Patent Application No. 14/747,490 for DUAL-PROJECTOR THREE-DIMENSIONAL SCANNER filed June 23, 2015 (Jovanovski et al.); and
U.S. Patent Application No. 14/748,446 for CORDLESS INDICIA READER WITH A MULTIFUNCTION COIL FOR WIRELESS CHARGING AND EAS DEACTIVATION, filed June 24, 2015 (Xie et al.).

In the specification and/or figures, typical embodiments of the invention have been disclosed. The present invention is not limited to such exemplary embodiments. The use of the term "and/or" includes any and all combinations of one or more of the associated listed items. The figures are schematic representations and so are not necessarily drawn to scale. Unless otherwise noted, specific terms have been used in a generic and descriptive sense and not for purposes of limitation.

## Claims

1. A system comprising:
a plurality of data collection devices to receive and provide retail store product inventory data, rate of sale data, and incoming product inventory data in real time;
a programmed computer coupled to receive the data from the plurality of data collection devices and execute code to generate and prioritize restocking workflow activities as a function of the received data; and
wherein the programmed computer further provides the restocking workflow activities to at least one of the data collection devices to direct a worker to restock a product.

2. The system of claim 1, wherein the at least one data collection device comprises a voice recognition headset and the workflow activities are provided to the worker via voice.

3. The system of claim 1, wherein restocking workflow activities are prioritized based on a projected time when the product will be out of stock on a shelf in the retail store.

4. The system of claim 1, comprising obtaining a profit margin for each product and prioritizing based on profit margin.

5. The system of claim 1, wherein the restocking workflow activities are prioritized to minimize an amount of empty shelf space.

6. The system of claim 1, wherein the data used to generate and prioritize restocking workflow activities is weighted according to retail store management set priorities.

7. The system of claim 1, wherein the restocking workflow activities are interleaved with existing worker workflow activities based on a best fit context of the worker.

8. The system of claim 7, wherein providing restocking workflow activities comprises:
obtaining a list of activities being performed by a worker includes obtaining multiple lists of activities for multiple workers, and wherein the interleaving of the surprise activity is based on a best fit context of the multiple workers.

9. The system of claim 1 wherein the list of restocking activities forms a new list of workflow activities for a worker.

10. A method comprising:
receiving at a programmed computer, retail store product inventory data, rate of sale data, and incoming product inventory data in real time from a plurality of data collection devices;
executing code on the computer to generate and prioritize restocking workflow activities as a function of the received data; and
providing via the programmed computer, the restocking workflow activities to at least one of the data collection devices to direct a worker to restock a product.

11. The method of claim 10, wherein the at least one data collection device comprises a voice based headset and the workflow activities are provided to the worker via voice.

12. The method of claim 10, wherein restocking workflow activities are prioritized based on a projected time when the product will be out of stock on a shelf in the retail store.

13. The method of claim 10, comprises obtaining a profit margin for each product and prioritizing based on profit margin.

14. The method of claim 10, wherein the restocking workflow activities are prioritized to minimize an amount of empty shelf space.

15. The method of claim 10, wherein the data used to generate and prioritize restocking workflow activities is weighted according to retail store management set priorities.
